# EUROPÄISCHE PATENTSCHRIFT

(11) **EP 1 046 841 B1**
(45) Veröffentlichungstag und Bekanntmachung des Hinweises auf die Patenterteilung: **05.11.2003**
(21) Anmeldenummer: 00106391.6
(22) Anmeldetag: 23.03.2000
(51) Int. Cl.: F16J 15/32

(54) **Wellenabdichtung für rotierende Wellen**
Lip seal for rotating shaft
Joint à lèvre pour arbre tournant

(30) Priorität: 23.04.1999 DE 19918505
(43) Veröffentlichungstag der Anmeldung: 25.10.2000
(73) Patentinhaber: Carl Freudenberg KG, 69469 Weinheim (DE)
(72) Erfinder: Joly, Philippe, 52200 Langres (FR)

(56) Entgegenhaltungen:
- EP-A- 0 895 009
- DE-A- 19 539 057
- GB-A- 589 259

## Beschreibung

Für die Abdichtung von rotierenden Wellen sind verschiedene Systeme bekannt. Zum einen geht es dabei darum, das Schmiermittel an einem Austritt nach außen zu hindern. Zum anderen soll ein Schutz gegen das Eindringen von Staub und anderen Schmutzteilen in die Wellenlagerung verhindert werden. Eine Wellenabdichtung soll in der Regel möglichst einfach im Aufbau sein und eine leichte Montage ermöglichen. Außerdem soll sie eine möglichst lange Lebensdauer haben. Um eine beidseitige Abdichtung nach innen gegenüber dem Schmiermittel und nach außen gegenüber Schmutzteilen zu erreichen, werden häufig Abdichtungen aus polymerem Material benutzt, die mit entsprechenden Dichtlippen versehen sind. Eine beachtliche Bauhöhe ist hier meist die Folge. Eine verringerte Bauhöhe ist möglich, wenn als Material für die Dichtscheibe PTFE (Polytetrafluorethylen) oder ein artverwandter Werkstoff benutzt wird.

### Stand der Technik

In der DE OS 36 07 662 wird eine Dichtung behandelt, bei der die Dichtringscheibe aus PTFE besteht, die von einem Stützring gehalten ist. Die Dichtringscheibe besteht aus einem Haftteil, mit dem sie am Stützring befestigt ist und einem Abdichtteil mit einer Dichtlippe, welche die Welle dichtend umschließt. Generell haben PTFE-Produkte nur eine geringe elastische Verformungsmöglichkeit. Das hat zur Folge, daß die Dichtlippe unter Druck und Temperatur bleibend plastisch verformt wird und nicht mehr ausreichend abdichtet. Deshalb ist die Dichtscheibe auf ihrer Oberfläche mit wellenförmigen Einschnitten versehen, um eine erhöhte Flexibilität der Scheibe zu erreichen. Die in der Mitte der Scheibe befindliche Dichtlippe wird dadurch flexibler an die Welle angedrückt. Die Dichtlippe selbst hat keine Einschnitte, und es kann nicht ausgeschlossen werden, daß sie schnell verhärtet und undicht wird.

Durch die DE OS 195 39 057 ist eine weitere Wellenabdichtung bekannt geworden, deren Aufbau aus Dichtringscheibe mit Haftteil und Abdichtteil sowie einem Stützring mit dem voranstehend geschilderten Stand der Technik vergleichbar ist. Der Abdichtteil besteht jedoch nicht nur aus einer Dichtlippe, sondern es wird ein erheblich größerer Teil des Abdichtteils an die Welle zu Dichtzwecken angelegt. Dabei kommen auch die Einschnitte, welche die Profilierung am Abdichtteil bilden und eine Rückförderung des eingesetzten Schmiermittels bewirken, zur Anlage an der Welle. Es kommt somit die Oberflächenprofilierung als Dichtfläche zum Einsatz. Die hier ausgeübte radiale Kraft des Abdichtteils ist nicht unbeachtlich

### Darstellung der Erfindung

Der Erfindung liegt die Aufgabe zugrunde, eine Welle mit Wellenabdichtung für rotierende Wellen zu schaffen, die möglichst einfach in ihrem Aufbau ist und eine gute Zurückhaltung des Schmiermittels ergibt. Dabei soll unter Verwendung einer Dichtringscheibe aus PTFE oder artverwandtem Werkstoff eine möglichst lange Lebensdauer der Dichtung erzielt werden. Die Dichtung soll eine möglichst kleine Bauhöhe haben und eine gute Rückförderung des Schmiermittels ergeben. Auch soll ein Verkoken am Abdichtteil vermieden werden.

Die Lösung der gestellten Aufgabe wird bei einer Welle mit Wellenabdichtung für rotierende Wellen mit einer Dichtringscheibe aus PTFE oder artverwandtem Werkstoff aus einem Haftteil und einem Abdichtteil, die von einem Stützring in einer Öffnung gehalten ist und die am Abdichtteil im Bereich ihrer Dichtfläche mit einer spiraligen Profilierung zur Rückförderung des eingesetzten Schmiermittels versehen ist, erfindungsgemäß dadurch erreicht, daß im Dichtflächenbereich von Welle und Abdichtteil die Welle mit einer konusförmigen Abstufung versehen ist und daß die Dichtringscheibe mit ihrem Abdichtteil an der Abstufung dichtend anliegt. Bei dieser Ausführung der Wellenabdichtung wird die Form der Welle konstruktiv miteinbezogen. Durch die konusförmige Ausbildung der Welle im Dichtflächenbereich wird die radiale Beanspruchung der Dichtscheibe reduziert. Die Pumpwirkung der Profilierung an der Dichtscheibe wird erhöht. Die günstige Anordnung des Abdichtteils an dem konusförmigen Teil der Welle läßt darüberhinaus eine Reduktion der Bauhöhe der Dichtung zu, so daß der für die Dichtung beanspruchte Teil der Wellenlänge reduziert werden kann. Letztlich ergibt sich eine Erhöhung der Lebensdauer der Dichtung.

Die konusförmige Ausgestaltung der Welle im Dichtflächenbereich ermöglicht außerdem eine sehr einfache Herstellung der Dichtringscheibe aus PTFE, in dem eine eventuelle Vorformung der Dichtringscheibe entfällt. In unbelastetem Zustand sind Haftteil und Abdichtteil der Dichtringscheibe in einer Ebene. Die für die Dichtung erforderliche Vorspannung wird beim Aufsetzen der Dichtscheibe auf die Welle erreicht. Dabei wird sowohl eine radiale als auch axiale Vorspannung erwirkt.

Auf seiner der Dichtfläche abgewandten Oberfläche wird das Abdichtteil ebenfalls mit einer Profilierung versehen, die auch spiralförmig ist. Sie soll die Elastizität des Abdichtteils unterstützen und außerdem eine gute Wärmeabführung ergeben. Eine Rückförderung des Schmiermittels findet hier nicht statt. Bevorzugt wird die Profilierung auf der Oberfläche des Abdichtteils bogenförmig ausgebildet. Das ergibt eine größtmögliche Oberfläche zur Abfuhr der Reibungswärme.

Für die Halterung der Dichtringscheibe können Stützringe unterschiedlicher Konstruktion benutzt werden. Dabei ist es günstig, wenn der Stützring mindestens teilweise von einer Ummantelung aus polymerem Werkstoff eingefaßt ist. Hierdurch kann eine gute Verbindung zwischen Stützring und Haftteil der Dichtscheibe erzielt werden.

Der Konuswinkel an der Abstufung der Welle kann variieren je nach Einsatzgebiet der Abdichtung. Er wird in der Regel kleiner als 70° gewählt. Ein guter Bereich für den Konuswinkel liegt bei 25 bis 65°, vorzugsweise bei 45° Grad. Bei einem Konuswinkel von 45°Grad wurden in Versuchen sehr gute Ergebnisse erzielt.

### Ausführung der Erfindung

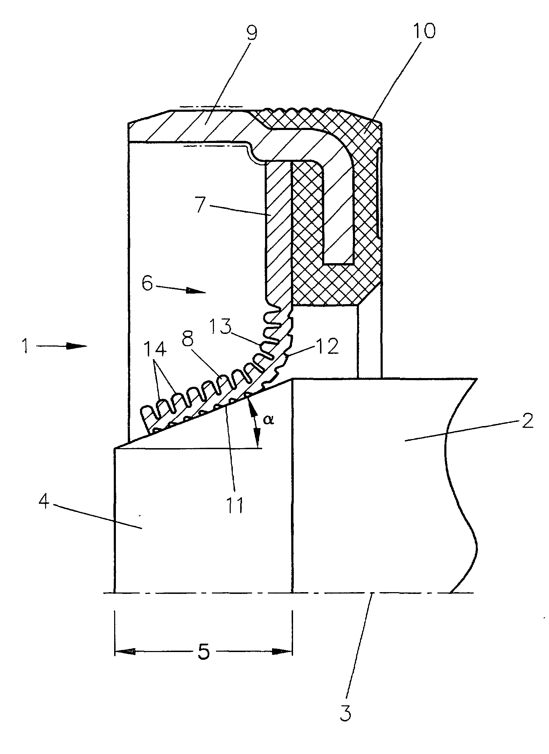

Anhand eines in der Zeichnung dargestellten Ausführungsbeispiel wird die Erfindung näher erläutert.

In die Wellenabdichtung 1 ist die Welle 2 miteinbezogen. Die Welle 2 rotiert um die Achse 3 und ist mit einer Abstufung 4 versehen, die konusförmig ausgebildet ist. Die Abstufung 4 oder auch der Konus überdecken den Dichtflächenbereich 5 der Welle 2. Die Dichtung selbst besteht aus der Dichtringscheibe 6, aus PTFE, die in einen Haftteil 7 und einen Abdichtteil 8 untergliedert ist. Der Haftteil 7 wird von dem Stützring 9 gehalten. Der Stützring 9 wird in eine nicht näher gezeigte Öffnung, beispielsweise eines Motorgehäuses, gehalten. Er ist teilweise von einer Ummantelung 10 aus polymerem Werkstoff eingefaßt. Die Verbindung von Stützring 9, der Ummantelung 10, sowie des Haftteils 7, kann durch Vulkanisation erreicht werden. Andere Verbindungen z.B. durch Kleben sind auch möglich.

Die Dichtfläche 11 des Abdichtteils 8 ist mit einer spiraligen sägezahnartigen Profilierung 12 versehen, die eine Rückförderung des einzusetzenden Schmiermittels bewirkt. Die dichtend am Konus 5 anliegende Dichtfläche wird somit durch die zwischen der Spiralnuten liegenden Erhebungen gebildet. Auf der der Dichtfläche 11 abgewandten Oberfläche 13 ist das Abdichtteil 8 mit einer Profilierung 14 versehen, die ebenfalls spiralförmig ausgebildet ist und mit bogenförmigen Abrundungen endet. Die Einschnitte der Spiralen 12 und 14 sind versetzt zueinander angeordnet, so daß ein Einschnitt der einen Spirale zwischen zwei Einschnitten der auf der anderen Seite liegenden anderen Spirale angeordnet ist. Dadurch wird eine Schwächung der Dichtscheibe vermieden. Der Haftteil 7 und der Abdichtteil 8 der Dichtringscheibe 6 liegen im unbelasteten Zustand in einer Ebene, die senkrecht zur Welle 2 verläuft. Bei der Montage der Dichtung wird der Abdichtteil 8 je nach Größe des Konuswinkels α abgewinkelt. Der Konuswinkel α bestimmt dabei sehr wesentlich, die von dem Abdichtteil 8 ausgeübte Vorspannung in radialer und axialer Richtung an der Welle 2.

## Patentansprüche

1. Welle mit Wellendichtung für rotierende Wellen mit einer Dichtringscheibe 6 aus PTFE oder artverwandtem Werkstoff aus einem Haftteil 7 und einem Abdichtteil 8, die von einem Stützring 9 in einer Öffnung gehalten ist und die am Abdichtteilbereich ihrer Dichtfläche mit einer spiraligen Profilierung zur Rückförderung des eingesetzten Schmiermittels versehen ist, **dadurch gekennzeichnet, daß** im Dichtflächenbereich (5) von Welle (2) und Abdichtteil (8) die Welle (2) mit einer konusförmigen Abstufung (4) versehen ist und daß die Dichtringscheibe (6) mit ihrem Abdichtteil (8) an der Abstufung (4) dichtend anliegt.

2. Welle mit Wellendichtung nach Anspruch 1, **dadurch gekennzeichnet, daß** der Haftteil (7) und der Abdichtteil (8) der Dichtringscheibe (6) in unbelastetem Zustand in einer Ebene liegen und daß die auf die Welle (2) aufgesetzte Dichtscheibe (6) mit ihrem Abdichtteil (8) unter radialer und axialer Vorspannung an der Welle (2) anliegt.

3. Welle mit Wellendichtung nach Anspruch 1 oder 2, **dadurch gekennzeichnet, daß** der Abdichtteil (8) auf seiner der Dichtfläche (11) abgewandten Oberfläche (13) mit einer spiralförmigen Profilierung (14) versehen ist.

4. Welle mit Wellendichtung nach einem der Ansprüche 1 bis 3, **dadurch gekennzeichnet, daß** die Profilierung (14) auf der Oberfläche (13) des Abdichtteils bogenförmig ausgebildet ist.

5. Welle mit Wellendichtung nach einem der Ansprüche 1 bis 4, **dadurch gekennzeichnet, daß** der Stützring (9) mindestens teilweise von einer Ummantelung (10) aus polymerem Werkstoff eingefaßt ist.

6. Welle mit Wellendichtung nach einem der Ansprüche 1 bis 5, **dadurch gekennzeichnet, daß** der Konuswinkel α der Abstufung (4) kleiner als 70° ist.

7. Welle mit Wellendichtung nach einem der Ansprüche 1 bis 6, **dadurch gekennzeichnet, daß** der Konuswinkel α der Abstufung (4) 25 bis 65°, vorzugsweise 45° Grad beträgt.

## Claims

1. A shaft with a shaft seal for rotating shafts with an annular sealing disc (6) made of PTFE or related material comprising an adhering part (7) and a sealing part (8), which is held in an opening by a supporting ring (9) and which is provided on the sealing part region of its sealing face with a spiral profiling for returning the lubricant used, **characterized in that**, in the sealing face region (5) of the shaft (2) and the sealing part (8), the shaft (2) is provided with a conical graduation (4) and **in that** the annular sealing disc (6) bears with its sealing part (8) against the graduation (4) in a sealing manner.

2. A shaft with a shaft seal according to claim 1, **characterized in that** the adhering part (7) and the sealing part (8) of the annular sealing disc (6) lie in one plane in the unloaded state and **in that** the sealing disc (6) fitted onto the shaft (2) bears with its sealing part (8) against the shaft (2) under radial and axial prestressing.

3. A shaft with a shaft seal according to either of claims 1 and 2, **characterized in that** the sealing part (8) is provided on its surface (13) facing away from the sealing face (11) with a spiral profiling (14).

4. A shaft with a shaft seal according to any one of claims 1 to 3, **characterized in that** the profiling (14) is formed arcuately on the surface (13) of the sealing part.

5. A shaft with a shaft seal according to any one of claims 1 to 4, **characterized in that** the supporting ring (9) is at least partly enclosed by a sheathing (10) of polymeric material.

6. A shaft with a shaft seal according to any one of claims 1 to 5, **characterized in that** the cone angle α of the graduation (4) is less than 70°.

7. A shaft with a shaft seal according to any one of claims 1 to 6, **characterized in that** the cone angle α of the graduation (4) is from 25 to 65°, preferably 45°.

## Revendications

1. Arbre avec joint pour arbre tournant, comprenant une rondelle d'étanchéité 6 en PTFE ou matériau de type apparenté, formée d'une partie adhérente 7 et d'une partie d'étanchéification 8, qui est maintenue dans une ouverture par une bague de support 9 et est pourvue, dans la zone de la partie d'étanchéification de sa surface d'étanchéité, d'un profilage en spirale servant au refoulement du lubrifiant utilisé, **caractérisé en ce que** l'arbre (2) est pourvu d'un gradin (4) en forme de cône dans la zone des surfaces d'étanchéité (5) de l'arbre (2) et de la partie d'étanchéification (8) et **en ce que** la rondelle d'étanchéité (6) est en contact étanche avec le gradin (4) avec sa partie d'étanchéification (8).

2. Arbre avec joint pour arbre selon la revendication 1, **caractérisé en ce que** la partie adhérente (7) et la partie d'étanchéification (8) de la rondelle d'étanchéité (6) sont situées dans un plan lorsqu'elles ne sont soumises à aucune charge et **en ce que** la rondelle d'étanchéité (6) montée sur l'arbre (2) est en contact avec l'arbre (2), avec sa partie d'étanchéification (8), sous l'effet d'une précontrainte radiale et axiale.

3. Arbre avec joint pour arbre selon la revendication 1 ou 2, **caractérisé en ce que** la partie d'étanchéification (8) est pourvue, sur sa surface (13) éloignée de la surface d'étanchéité (11), d'un profilage (14) en forme de spirale.

4. Arbre avec joint pour arbre selon l'une des revendications 1 à 3, **caractérisé en ce que** le profilage (14) sur la surface (13) de la partie d'étanchéification est exécuté de manière à avoir une forme arquée.

5. Arbre avec joint pour arbre selon l'une des revendications 1 à 4, **caractérisé en ce que** la bague de support (9) est entourée, au moins partiellement, d'une enveloppe (10) en matière polymère.

6. Arbre avec joint pour arbre selon l'une des revendications 1 à 5, **caractérisé en ce que** l'angle de cône α du gradin (4) est inférieur à 70°.

7. Arbre avec joint pour arbre selon l'une des revendications 1 à 6, **caractérisé en ce que** l'angle de cône α du gradin (4) mesure entre 25 et 65°, de préférence 45°.
